# FASCICULE DE BREVET EUROPEEN

(11) **EP 3 174 776 B1**
(45) Date de publication et mention de la délivrance du brevet: **06.06.2018**
(21) Numéro de dépôt: 15736542.0
(22) Date de dépôt: 08.06.2015
(51) Int. Cl.: B62D 25/08, B60R 13/02, B62D 25/14, B62D 25/24

(54) **DISPOSITIF POUR BOITE DE VITESSES AUTOMATIQUE DE VEHICULE AUTOMOBILE**
VORRICHTUNG FÜR EIN AUTOMATIKGETRIEBE EINES KRAFTFAHRZEUGS
DEVICE FOR A MOTOR VEHICLE AUTOMATIC GEARBOX

(30) Priorité: 31.07.2014 FR 1457441
(43) Date de publication de la demande: 07.06.2017
(73) Titulaire: Renault S.A.S., 92100 Boulogne-Billancourt (FR)
(72) Inventeur: DURAND, Stephane, F-28630 Berchères-les-Pierres (FR); DE BOISSIEU, Cedric, F-94500 Champigny sur Marne (FR); COUAPEL, Philippe, F-75011 Paris (FR); MULLER, Bruno, F-78150 Le Chesnay (FR)
(86) Numéro de dépôt international: PCT/FR2015/051510
(87) Numéro de publication internationale: WO 2016/016523

(56) Documents cités:
- FR-A1- 2 989 056
- JP-A- 2006 346 766

## Description

La présente invention a pour objet un dispositif de transmission pour véhicule automobile, et notamment un dispositif pour boîte de vitesses automatique de véhicule automobile.

Une boîte de vitesses est un dispositif mécanique, ou plus généralement mécatronique, permettant d'adapter la transmission d'un mouvement entre un arbre moteur et un arbre récepteur. Son cas d'utilisation le plus fréquent est la transformation et la transmission de la puissance d'un moteur.

La boîte manuelle est la formule la plus commune de transmission. Elle est dite à engrenages puisqu'elle comporte une série de pignons qui permet de monter ou de descendre les rapports de façon synchronisée. La boîte manuelle est actionnée avec un levier de vitesse le plus souvent situé au milieu des deux sièges avant et plus rarement placé au volant. Pour actionner le levier, il est indispensable d'actionner dans le même temps la pédale d'embrayage afin de séparer la boîte de vitesses du moteur. Le changement de pignon permet de réduire ou d'augmenter la vitesse selon que l'on souhaite monter d'une vitesse ou rétrograder.

Une boîte de vitesses automatique dispose quant à elle d'un système capable de déterminer de façon autonome le meilleur rapport de transmission. Ce type de boîte détermine seul le bon rapport de transmission grâce à des informations telles que le couple et la vitesse de rotation du moteur, l'enfoncement de la pédale de l'accélérateur, la vitesse du véhicule, le mode de fonctionnement de la boîte, le couple résistant du véhicule et d'autres fonctions plus complexes qui dépendent du niveau technologique de la boîte de vitesses automatique.

Dans le cas d'un véhicule à transmission automatique, il est nécessaire d'obturer l'orifice qui se trouve dans le tablier séparant le compartiment moteur de l'habitacle, cet orifice servant dans les versions à transmission manuelle à passer un émetteur hydraulique d'embrayage. L'émetteur hydraulique d'embrayage est un des organes qui assurent la liaison mécanique entre la pédale d'embrayage et la boîte de vitesses. Cet émetteur d'embrayage étant relié électroniquement à un calculateur à l'aide d'un connecteur, lorsque l'émetteur d'embrayage n'est pas utilisé, c'est-à-dire lorsqu'on utilise une boîte de vitesses automatique, il est nécessaire d'immobiliser le connecteur provenant du câblage, qui lui est très souvent commun aux deux versions. Ceci nécessite la mise en place d'une pièce spécifique afin d'immobiliser le connecteur, en plus d'un obturateur qui prend la place de l'émetteur.

La présente invention vise à remédier à ces inconvénients. Le document FR 2 989 056 correspond au préambule de la revendication 1. L'invention a ainsi pour objet un dispositif pour boîte de vitesses automatique de véhicule automobile, comprenant les caractéristiques de la revendication 1.

L'obturateur est avantageusement une pièce moulée.

L'obturateur est typiquement en polymère.

L'obturateur peut être clipsé autour de l'orifice.

Le connecteur peut être relié à un câble issu d'un câble général d'alimentation électrique.

Le tablier peut être métallique.

L'émetteur d'embrayage comprend typiquement une partie hydraulique à travers laquelle passe un liquide de transmission.

L'invention a également pour objet un véhicule automobile comprenant un dispositif décrit ci-dessus.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 est une vue générale en perspective d'un tablier, dans le cas d'une transmission manuelle,
- la figure 2 est une vue en perspective d'un dispositif selon l'invention,
- la figure 3 est une vue partielle de derrière du dispositif de la figure 2, et
- la figure 4 est une vue de partielle de devant du dispositif de la figure 2.

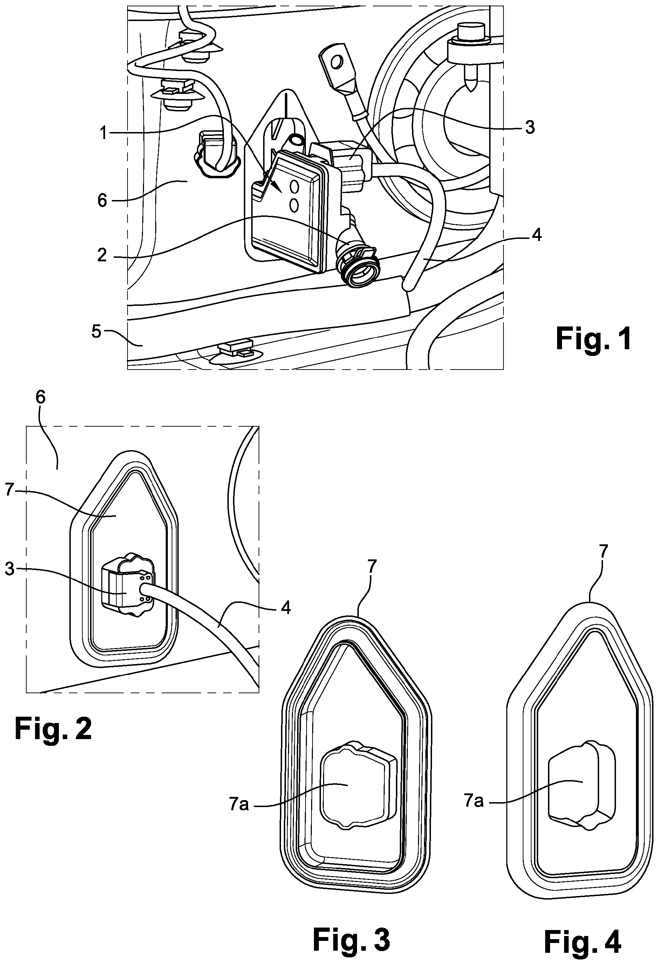

Tel qu'illustré à la figure 1, un dispositif d'embrayage comprend, lorsque l'embrayage est manuel, un émetteur d'embrayage hydraulique 1,2. En effet, un dispositif d'embrayage de véhicule automobile est généralement actionné à l'aide d'une pédale de commande d'embrayage accessible depuis un habitacle du véhicule. Il est connu de relier cette pédale de commande au dispositif d'embrayage par un système de commande hydraulique. L'émetteur hydraulique fait partie de la commande hydraulique et assure ainsi la liaison mécanique entre la pédale d'embrayage et la boîte de vitesses.

L'émetteur d'embrayage comprend une partie électrique 1 et une partie hydraulique 2 à travers laquelle passe le liquide de transmission. Un connecteur 3 est destiné à relier la partie électrique 1 à un calculateur. Le connecteur 3 est relié à un câble 4 issu d'un câble général d'alimentation électrique 5. L'émetteur d'embrayage 1 traverse un tablier 6, qui est la paroi, en général métallique, destinée à séparer le compartiment moteur, dans lequel se trouve la boîte de vitesses, de l'habitacle, dans lequel se situe la pédale d'embrayage.

Lorsqu'on souhaite passer en transmission automatique, l'émetteur d'embrayage 1,2 devient inutile. Il est alors nécessaire d'obturer l'orifice qui était traversé par l'émetteur d'embrayage 1,2, de manière à assurer une étanchéité à l'eau et une étanchéité acoustique. Le connecteur 3 devenant également inutile, il est en outre nécessaire de l'immobiliser.

Conformément à l'invention, tel qu'illustré aux figures 2, 3 et 4, le dispositif comprend un obturateur étanche 7 muni d'une cavité 7a destinée à recevoir le connecteur 3. Le contour de la cavité 7a correspond avantageusement à la forme du connecteur 3. L'obturateur 7 est une pièce moulée, typiquement en polymère, un matériau qui est suffisamment souple au montage et suffisamment rigide pour maintenir le connecteur 3. L'obturateur 7 peut être de forme pentagonale. Il peut par exemple comprendre une partie rectangulaire et une partie triangulaire adjacente à la partie rectangulaire. La cavité 7a est avantageusement disposée au centre de l'obturateur 7, dans la partie rectangulaire de l'obturateur 7.

Ainsi, le dispositif met en oeuvre une seule et même pièce assurant la fonction principale d'obturation du tablier, à la place de l'émetteur d'embrayage qui était présent lors d'une transmission manuelle. Cette pièce unique assure également la fonction d'immobilisation de la connectique restée vacante lors d'une transmission automatique. La fixation du connecteur se fait directement dans le moule de l'obturateur, par la forme de l'empreinte du connecteur. Il n'est ainsi pas nécessaire d'ajouter une pièce et on économise le temps d'un montage supplémentaire. En outre, la position du connecteur est très proche dans la version manuelle et dans la version automatique, ce qui ne nécessite donc pas d'adaptation du câblage.

## Revendications

1. Dispositif pour boîte de vitesses automatique de véhicule automobile, comprenant :
- un élément (6) séparant le compartiment moteur de l'habitacle, appelé tablier, le tablier (6) étant muni d'un orifice destiné à être traversé, en cas de transmission manuelle, par un émetteur d'embrayage (1,2) assurant la liaison mécanique entre la pédale d'embrayage et la boîte de vitesses, obturateur (7) assurant l'obturation de l'orifice, le dispositif étant **caractérisé en ce qu'**il comprend en outre un connecteur (3) destiné à relier un calculateur du véhicule à l'émetteur d'embrayage (1, 2) et **en ce que** l'obturateur est muni d'une zone de réception (7a) du connecteur (3) assurant la réception du connecteur (3).

2. Dispositif selon la revendication 1, **caractérisé en ce que** l'obturateur (7) est une pièce moulée.

3. Dispositif selon la revendication 1 ou 2, **caractérisé en ce que** l'obturateur (7) est en polymère.

4. Dispositif selon l'une des revendications 1 à 3, **caractérisé en ce que** l'obturateur (7) est clipsé autour de l'orifice.

5. Dispositif selon l'une des revendications 1 à 4, **caractérisé en ce que** le connecteur (3) est relié à un câble (4) issu d'un câble général (5) d'alimentation électrique.

6. Dispositif selon l'une des revendications 1 à 5, **caractérisé en ce que** le tablier (6) est métallique.

7. Véhicule automobile **caractérisé en ce qu'**il comprend un dispositif selon l'une des revendications 1 à 6.

## Patentansprüche

1. Vorrichtung für ein Automatikgetriebe eines Kraftfahrzeugs, welche umfasst:
- ein Element (6), das den Motorraum vom Fahrgastraum trennt, Spritzwand genannt, wobei die Spritzwand (6) mit einer Öffnung ausgestattet ist, die dazu bestimmt ist, im Falle eines Handschaltgetriebes von einem Kupplungsgeber (1, 2) durchquert zu werden, der die mechanische Verbindung zwischen dem Kupplungspedal und dem Getriebe sicherstellt,
ein Verschlussstück (7), das den Verschluss der Öffnung sicherstellt, wobei die Vorrichtung **dadurch gekennzeichnet ist, dass** sie außerdem einen Verbinder (3) umfasst, der dazu bestimmt ist, einen Rechner des Fahrzeugs mit dem Kupplungsgeber (1, 2) zu verbinden, und dadurch, dass das Verschlussstück mit einem Aufnahmebereich (7a) für den Verbinder (3) ausgestattet ist, der die Aufnahme des Verbinders (3) sicherstellt.

2. Vorrichtung nach Anspruch 1, **dadurch gekennzeichnet, dass** das Verschlussstück (7) ein Gussstück ist.

3. Vorrichtung nach Anspruch 1 oder 2, **dadurch gekennzeichnet, dass** das Verschlussstück (7) aus Polymer besteht.

4. Vorrichtung nach einem der Ansprüche 1 bis 3, **dadurch gekennzeichnet, dass** das Verschlussstück (7) um die Öffnung herum geklipst wird.

5. Vorrichtung nach einem der Ansprüche 1 bis 4, **dadurch gekennzeichnet, dass** der Verbinder (3) mit einem Kabel (4) verbunden ist, das aus einem allgemeinen Stromversorgungskabel (5) kommt.

6. Vorrichtung nach einem der Ansprüche 1 bis 5, **dadurch gekennzeichnet, dass** die Spritzwand (6) metallisch ist.

7. Kraftfahrzeug, **dadurch gekennzeichnet, dass** es eine Vorrichtung nach einem der Ansprüche 1 bis 6 umfasst.

## Claims

1. Device for a motor vehicle automatic gearbox, comprising:
- an element (6) separating the engine compartment from the passenger compartment, called a bulkhead, the bulkhead (6) being equipped with an orifice intended to be passed through, in case of manual transmission, by a clutch transmitter (1, 2) that provides the mechanical link between the clutch pedal and the gearbox, a shutter (7) that shuts off the orifice, the device being **characterized in that** it furthermore comprises a connector (3) intended to link a computer of the vehicle to the clutch transmitter (1, 2), and **in that** the shutter is equipped with a zone (7a) for receiving the connector (3) that receives the connector (3).

2. Device according to Claim 1, **characterized in that** the shutter (7) is a moulded part.

3. Device according to Claim 1 or 2, **characterized in that** the shutter (7) is made of polymer.

4. Device according to one of Claims 1 to 3, **characterized in that** the shutter (7) is clipped around the orifice.

5. Device according to one of Claims 1 to 4, **characterized in that** the connector (3) is linked to a cable (4) coming from a general electric power supply cable (5) .

6. Device according to one of Claims 1 to 5, **characterized in that** the bulkhead (6) is metallic.

7. Motor vehicle, **characterized in that** it comprises a device according to one of Claims 1 to 6.
